# EUROPÄISCHE PATENTANMELDUNG

(11) **EP 4 011 194 A1**
(43) Veröffentlichungstag der Anmeldung: **15.06.2022**
(21) Anmeldenummer: 21211757.6
(22) Anmeldetag: 01.12.2021
(51) Int. Cl.: A01G 7/04, H05B 45/20, F21S 4/20, F21Y 105/16, F21Y 113/13, F21Y 115/10

(54) **LED-PLATINENMODUL ZUR BEREITSTELLUNG EINES PHOTOBIOLOGISCH AKTIVEN VOLLSPEKTRUMS**

(30) Priorität: 11.12.2020 DE 102020133237
(71) Anmelder: DH Licht GmbH, 42489 Wülfrath (DE)
(72) Erfinder: Dinter, Holger, 42489 Wülfrath (DE)
(74) Vertreter: Bendele, Tanja

(57) **Zusammenfassung**

Gegenstand der Erfindung ist ein Platinenmodul zur Bereitstellung von photobiologisch aktiver Strahlung umfassend mindestens eine Basisplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K1, K2 steuerbar sind, und optional mindestens eine Ergänzungsplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K5, K6 steuerbar sind, wobei mindestens ein Kanal der Basisplatine und/oder mindestens ein Kanal der Ergänzungsplatine zur Steuerung von mindestens zwei Gruppen von Leuchtdioden vorgesehen ist, wobei sich diese mindestens zwei Gruppen von Leuchtdioden hinsichtlich ihrer Lichtfarbe und/oder Farbtemperatur voneinander unterscheiden. Ferner ist Gegenstand der Erfindung ein LED-Belichtungssystem umfassend das Platinenmodul sowie dessen Verwendung zur Erzeugung eines photobiologisch aktiven Vollspektrums.

## Beschreibung

Gegenstand der Erfindung ist ein Platinenmodul zur Bereitstellung von photobiologisch aktiver Strahlung umfassend mindestens eine Basisplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K1, K2 steuerbar sind, und optional mindestens eine Ergänzungsplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K5, K6 steuerbar sind, wobei mindestens ein Kanal der Basisplatine und/oder mindestens ein Kanal der Ergänzungsplatine zur Steuerung von mindestens zwei Gruppen von Leuchtdioden vorgesehen ist, wobei sich diese mindestens zwei Gruppen von Leuchtdioden hinsichtlich ihrer Lichtfarbe und/oder Farbtemperatur voneinander unterscheiden. Ferner ist Gegenstand der Erfindung ein LED-Belichtungssystem umfassend das Platinenmodul sowie dessen Verwendung zur Erzeugung eines photobiologisch aktiven Vollspektrums.

Licht stellt für Pflanzen neben der Verfügbarkeit von Wasser den wichtigsten abiotischen Faktor dar. So wird deren Wachstum und Entwicklung im Wesentlichen durch drei lichtbedürftige Prozesse - die Photosynthese, die Photomorphogenese und den Photoperiodismus - gesteuert. Die Photosynthese bildet als Erzeugungsreaktion für die organischen Komponenten der Pflanze die Grundvoraussetzung für alle weiteren Prozesse und wird am effektivsten mithilfe von Licht mit einer Wellenlänge von größer 400 nm (blau) und kleiner 700 nm (rot) betrieben. Unter Photomorphogenese wird der Formgebungseffekt des Lichts auf Pflanzen sowie die Beeinflussung des Gehalts an pflanzlichen sekundären Inhaltsstoffen mithilfe verschiedener Wellenlängen verstanden. Photoperiodismus schließlich bezeichnet das Phänomen, dass Pflanzen auf unterschiedliche Weise auf die Länge der Tageslichtperiode, insbesondere in Bezug auf die Blütenbildung, reagieren.

In diesem Sinne werden sowohl das Pflanzenwachstum als auch die Pflanzenentwicklung durch Faktoren wie die Belichtungsdauer, die Strahlungsqualität und die spektrale Zusammensetzung der emittierten Strahlung (Strahlungsqualität) beeinflusst.

Natürliche Strahlungsquellen sind hierfür jedoch, insbesondere in den Wintermonaten und in den Ländern zwischen dem 40. und 80. Breitengrad, aufgrund der erheblich kürzeren Tage sowie des niedrigen Sonnenstands und der häufigen Wolkendecke in der der Regel nicht ausreichend. Dementsprechend ist es zur Steigerung der Produktion und Qualität von Pflanzkulturen erforderlich, zusätzliche Mengen von Lichtenergie im Rahmen einer Assimilationsbelichtung durch künstliche Lichtquellen zuzuführen. Dabei ist sowohl eine, das Tageslicht ergänzende Wachstumsbelichtung als auch eine photoperiodische Belichtung zur Blütezeitsteuerung möglich.

Darüber hinaus kann mithilfe geeigneter Lichtquellen sogar eine vollständige Ersetzung des Tageslichts durch künstliches Licht erfolgen. Diese Kultivierung ohne Tageslicht spielt beispielsweise im Zusammenhang mit wirtschaftlich genutzten oder für wissenschaftliche Zwecke eingerichteten Klimakammern und/oder Phenotypisierungskammern sowie Phytotronen eine wichtige Rolle. Zudem kann sie bei der zunehmend in Mehrlagenkulturanlagen realisierten Produktion von Nutz-Pflanzen ("*Vertical Farming"*) zum Einsatz kommen.

In diesem Zusammenhang ist es unerlässlich, dass die betreffenden Pflanzen mit einem ausgewogenen Spektrum versorgt werden, das möglichst alle Wellenlängenbereiche umfasst, die auch in natürlichem Sonnenlicht enthalten sind. Dies betrifft vorzugsweise den Anteil des Sonnenlichts, der die photobiologisch nutzbare und insbesondere die photosynthetisch nutzbare Strahlung für die Pflanzen umfasst.

Der vorliegenden Erfindung liegt daher die Aufgabe zu Grunde, ein Platinenmodul für eine LED-Leuchte bereitzustellen, welches auf die besonderen Anforderungen pflanzlicher Organismen ausgelegt ist und eine Belichtung ähnlich dem photobiologisch nutzbaren Farbspektrum des natürlichen Sonnenlichts ermöglicht. Insbesondere sollte ein Platinenmodul bereitgestellt werden, das zur Erzeugung eines Vollspektrums im Wellenlängenbereich von 380 bis 780 nm vorgesehen ist. Ebenso liegt der vorliegenden Erfindung die Aufgabe zugrunde, ein LED-Belichtungssystem umfassend das Platinenmodul bereitzustellen, das die Anpassung und Steuerung unterschiedlicher, auf die jeweiligen Bedürfnisse der entsprechenden Pflanzenkultur abgestimmter Parameter gestattet, insbesondere auch auf deren Wachstumszyklen.

Die Aufgaben der Erfindung werden gelöst durch ein Platinenmodul nach Anspruch 1 und ein LED-Belichtungssystem nach Anspruch 11, durch die Verwendung des Platinenmoduls gemäß Anspruch 12 sowie eine Software zur Steuerung des Platinenmoduls gemäß Anspruch 15. Bevorzugte Ausführungsformen der Erfindung sind in den Unteransprüchen sowie in der Beschreibung detailliert offenbart.

Erfindungsgemäß wird die Aufgabe der vorliegenden Erfindung dadurch gelöst, dass ein LED-Platinenmodul, bei dem im Sinne einer additiven Farbmischung mindestens ein Kanal zur Steuerung von mindestens zwei sich hinsichtlich ihrer Lichtfarbe und/oder Farbintensität voneinander unterscheidenden Gruppen von Leuchtdioden vorgesehen ist, zur Belichtung von Pflanzkulturen mit photobiologisch aktiver Strahlung bereitgestellt wird. Vorzugsweise sind mindestens zwei, insbesondere acht, voneinander unabhängige Kanäle zur Steuerung von insgesamt mindestens drei, vorzugsweise zehn, unterschiedlichen Gruppen von Leuchtdioden vorgesehen, wobei mindestens ein Kanal im Sinne einer additiven Farbmischung die gleichzeitige Steuerung von mindestens zwei sich hinsichtlich ihrer Lichtfarbe und/oder Farbintensität voneinander unterscheidenden Gruppen von Leuchtdioden übernimmt.

Die photosynthetisch aktive Strahlung (PAR = *photosynthetically active radiation*) beschreibt den für die Photosynthese entscheidenden Wellenlängenbereich der elektromagnetischen Strahlung, nämlich den Spektralbereich des Lichts zwischen 400 und 700 nm. Der PAR-Wert beinhaltet weder UV- noch tiefrote Strahlung, welche jedoch ebenfalls einen entscheidende Einfluss auf das Pflanzenwachstum hat. Aus diesem Grund wird der Wellenlängenbereich der PAR durch den Begriff der photobiologisch aktiven Strahlung (PBAR = *photobiologically active radiation*)*,* welche den Spektralbereich des Lichts zwischen 280 und 800 nm beschreibt, erweitert. Die Einheit zur Quantifizierung der PBAR bzw. der PAR ist die Photonenflussdichte (PFD) bzw. photosynthetische Photonenflussdichte (PPFD), welche die Anzahl an Photonen im entsprechenden Wellenlängenbereich beschreibt, die innerhalb einer Sekunde auf einer Fläche auftreffen. Die PFD bzw. PPFD wird in µmol/m²s angegeben. Die Intensität der jeweils erforderlichen PFD bzw. PPFD hängt von den Ansprüchen der entsprechenden Pflanzkultur ab.

Die erfindungsgemäßen Platinenmodule können sowohl im Rahmen einer das Tageslicht ergänzenden Wachstumsbelichtung oder einer photoperiodischen Belichtung als auch zur Kultivierung ohne natürliches Tageslicht eingesetzt werden. Das erfindungsgemäße Platinenmodul oder das LED-Belichtungssystem erlaubt eine Einstellung der photobiologisch aktiven Strahlung an die Wachstumsphasen einer Pflanze, insbesondere Pflanzenkultur. Bei fachgemäßer Anwendung stimuliert dabei die zusätzliche bzw. ausschließliche Belichtung die Assimilation und damit das Wachstum der entsprechenden Pflanzkulturen und führt somit zu einem kürzeren Produktionszyklus, stärkeren und gesünderen Pflanzen sowie zu einer früheren Blüte. Demgemäß wird der Anwender in die Lage versetzt, die Produktivität durch die Erzeugung von mehr und besseren Pflanzen in kürzeren Kulturzeiten zu steigern und die Pflanzen so zu produzieren, dass sie zu jeweils günstigen Zeiten am Markt zur Verfügung stehen. Darüber hinaus bietet insbesondere die Kultivierung unter Ausschluss des Tageslichts, beispielsweise in pflanzenbiologischen Versuchen in Klimakammern und Phenotypisierungskammern sowie Phytotronen, die Möglichkeit, verschiedenste Umweltbedingungen zu simulieren oder unter Ausschluss von äußeren Umweltfaktoren unter kontrollierten Bedingungen eine gleichbleibende Pflanzenqualität zu erzielen.

Dementsprechend ist es erfindungsgemäß vorteilhaft, wenn das Platinenmodul oder das LED-Belichtungssystem die Erzeugung eines Vollspektrums in einem Wellenlängenbereich von 380 bis 780 nm, insbesondere mit Intensitätsmaxima im Bereich von 450 ± 5 nm, 475 ± 5 nm, 663 ± 5 nm und 733± 5 nm, ermöglicht.

Gegenstand der Erfindung ist daher ein Platinenmodul zur Bereitstellung von photobiologisch aktiver Strahlung umfassend mindestens eine Basisplatine mit einer Vielzahl an Leuchtdioden, insbesondere mindestens zwei bis eintausend Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K1, K2 steuerbar sind, und optional mindestens eine Ergänzungsplatine mit einer Vielzahl an Leuchtdioden, insbesondere mindestens zwei bis eintausend Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K5, K6 steuerbar sind, wobei mindestens ein Kanal der Basisplatine und/oder mindestens ein Kanal der Ergänzungsplatine zur Steuerung von mindestens zwei Gruppen von Leuchtdioden vorgesehen ist, wobei sich diese mindestens zwei Gruppen von Leuchtdioden hinsichtlich ihrer Lichtfarbe und/oder Farbtemperatur voneinander unterscheiden. Somit werden vorzugsweise über mindestens einen Kanal der Basisplatine und/oder der Ergänzungsplatine mindestens zwei unterschiedliche, sich hinsichtlich ihrer Lichtfarbe und/oder Farbtemperatur voneinander unterscheidenden Gruppen von Leuchtdioden gesteuert, so dass sich das hervorgerufene Emissionsspektrum aus der Addition der jeweils einzelnen Emissionsspektren der Gruppen von Leuchtdioden ergibt.

Die Bezeichnung Lichtfarbe kann synonym zu dem Begriff Spektralfarbe verwendet werden. Die Bezeichnung Farbtemperatur sagt etwas über die charakteristische Lichtfarbe gemäß DIN EN 12665 aus (Warmweiß: kleiner 3300K, neutralweiß: 3300 bis 5300 K, Kaltweiß: größer 5300 K).

Der Begriff Platinenmodul umfasst im Rahmen der vorliegenden Erfindung mindestens eine Platine (synonym zu Leiterplatte), welche als Träger für elektronische Bauteile, der mechanischen Befestigung und elektrischen Verbindung von mindestens drei unterschiedlichen Gruppen von Leuchtdioden (*light emitting diodes,* LEDs) jeweils gleicher Lichtfarbe und/oder gleicher Farbtemperatur dient. Die einzelnen Platinen (Basisplatine/Ergänzungsplatine) bestehen aus einem starren oder flexiblen elektrisch isolierenden Trägermaterial, welches mit den erforderlichen elektronischen Bauteilen bestückt ist. Als Trägermaterial kommen sowohl Hartpapier, mit Epoxidharz getränkte Glasfasermatten, Teflon, Aluminiumoxid oder Keramik als auch Polyesterfolien in Betracht. Ferner können im Bereich der Beleuchtungstechnik mit Hochleistungs-LEDs zur besseren Wärmeabführung Trägermaterialien mit Metallkernen wie Aluminium oder Kupfer verwendet werden. Die erfindungsgemäßen Platinen weisen vorzugsweise eine Länge von größer gleich 5 cm und eine Breite von größer gleich 1 cm, bevorzugte eine Größe von mindestens 10 cm x 2 cm bis 100 cm x 20 cm, besonders bevorzugt von mindestens 20 cm x 4 cm bis 50 cm x 10 cm, auf.

Die auf der Oberseite der jeweiligen Platinen angeordneten LEDs sind künstliche Licht- und Strahlungsquellen in Form von Halbleiterbauelementen, bei denen der Chip aus Halbleitermaterialien besteht und bei Anlegen einer Spannung und des entstehenden Stromflusses Strahlung in einer vom Halbleitermaterial abhängigen Wellenlänge emittiert wird. Sie zeichnen sich durch sehr schmale Emissionsspektren aus und sind in unterschiedlichen Farben und Weißtönen erhältlich, wobei unter einer farbigen LED eine Licht einer entsprechenden Lichtfarbe (tiefblau, blau, grün, rot, fernrot) emittierende LED und unter einer weißen LED eine weißes Licht einer entsprechenden Farbtemperatur emittierende LED zu verstehen ist. Insbesondere weist das Platinenmodul mindestens 10 bis 200 LEDs oder die Basisplatine/Ergänzungsplatine mindestens 10 bis 100 LEDs, vorzugsweise mindestens 50 bis 90 LEDs, auf, wobei die LEDs vorzugsweise in Gruppen von mindestens 5 bis 50 LEDs gleicher Lichtfarbe und/oder gleicher Farbtemperatur eingeteilt sind.

Dabei sind die LEDs vorzugsweise in Reihen und Spalten einer Matrix angeordnet, wobei nicht notwendigerweise alle LEDs einer Gruppe in der gleichen Reihe und/oder Spalte angeordnet sind. Vorzugsweise sind die LEDs auf der Basisplatine und/oder der Ergänzungsplatine in einer Matrix mit einer geraden Anzahl von Reihen und einer ungeraden Anzahl von Spalten angeordnet. Insbesondere sind die LEDs auf der Basisplatine und/oder der Ergänzungsplatine in mindestens zwei Reihen, bevorzugt mindestens vier, besonders bevorzugt mindestens sechs Reihen, und/oder mindestens fünf Spalten, bevorzugt mindestens neun, besonders bevorzugt mindestens 13 Spalten, angeordnet. In diesem Zusammenhang kann es bevorzugt sein, wenn die LEDs in der Matrix im Wesentlichen zentralsymmetrisch angeordnet sind, also in Bezug auf den Mittelpunkt der Matrix bzw. der Basis- oder Ergänzungsplatine eine punktsymmetrische Anordnung besitzen.

Besonders bevorzugt sind die LEDs auf der Basisplatine und/oder der Ergänzungsplatine in sechs Reihen und 13 Spalten angeordnet, wobei sowohl die erste und die sechste als auch die zweite und die fünfte Zeile zentralsymmetrisch sind. Insbesondere weisen die erste und die sechste Zeile jeweils LEDs einer Gruppe auf, während die zweite und die fünfte Zeile sowie die dritte und die vierte Zeile jeweils LEDs unterschiedlicher Gruppen umfassen. So sind in der ersten und sechsten Zeile vorzugsweise rote LEDs (Lichtfarbe: 650 bis 670 nm) oder weiße LEDs angeordnet. In der zweiten und fünften Zeile sind vorzugsweise rote LEDs (Lichtfarbe: 650 bis 670 nm) gemeinsam mit fernroten LEDs (Lichtfarbe: 720 bis 740 nm) oder grüne LEDs (Lichtfarbe: 495 bis 515 nm) gemeinsam mit weißen LEDs angeordnet. Zudem sind in der dritten und vierten Zeile vorzugsweise blaue LEDs (Lichtfarbe: 440 bis 460 nm und/oder 460 bis 480 nm) gemeinsam mit fernroten LEDs (Lichtfarbe: 720 bis 740 nm) oder gemeinsam mit grünen LEDs (Lichtfarbe: 495 bis 515 nm) und weißen LEDs angeordnet. Dabei kann es ferner bevorzugt sein, wenn die dritte und die vierte Zeile weder gleich noch zentralsymmetrisch sind, also jeweils voneinander abweichende LEDs unterschiedlicher Gruppen umfassen. Insbesondere weist die Basisplatine in der dritten Zeile blaue LEDs (Lichtfarbe: 460 bis 480 nm) sowie fernrote LEDs (Lichtfarbe: 720 bis 740 nm) und in der vierten Zeile zwei verschiedene blaue LEDs (Lichtfarbe: 440 bis 460 nm und 460 bis 480 nm) auf, während die Ergänzungsplatine in der dritten Zeile grüne LEDs (Lichtfarbe: 495 bis 515 nm) sowie weiße LEDs und in der vierten Zeile blaue LEDs (Lichtfarbe: 460 bis 480 nm) sowie weiße LEDs aufweist.

Die Steuerung der auf der Oberseite der Basisplatine und/oder der Ergänzungsplatine angeordneten LEDs erfolgt über mindestens zwei unabhängige Kanäle K1, K2 bzw. K5, K6, insbesondere acht unabhängige Kanäle K1, K2, K3, K4, K5, K6, K7, K8, welche jeweils ein geschlossenes System elektrischer Leitungen in Form eines Schaltkreises bilden und zum elektrischen Anschluss der in Gruppen gleicher Lichtfarbe und/oder gleicher Farbtemperatur eingeteilten LEDs dienen. Dabei können die einem Kanal zugeordneten LEDs in Serie und/oder in zwei Reihen parallelgeschaltet sein. Die einzelnen Kanäle sind insoweit unabhängig voneinander, dass sie getrennt voneinander angesteuert und jeweils einzeln hinsichtlich ihrer Intensität (0 % bis 100 %) betrieben werden können.

Erfindungsgemäß ist mindestens ein Kanal der Basisplatine und/oder mindestens ein Kanal der Ergänzungsplatine zur Steuerung von mindestens zwei, insbesondere mindestens drei, unterschiedlichen Gruppen von LEDs vorgesehen, welche sich gruppenweise hinsichtlich ihrer Lichtfarbe und/oder Farbtemperatur voneinander unterscheiden. In diesem Zusammenhang wird als Lichtfarbe (synonym zu Spektralfarbe) die Farbe einer selbstleuchtenden, insbesondere farbigen, Lichtquelle verstanden, welche durch die Wellenlänge des Emissionsmaximums des Spektrums bestimmt wird, das von dieser Lichtquelle ausgeht [Einheit: Nanometer (nm)], während die Farbtemperatur als Maß für den Farbeindruck einer, insbesondere weißen, Lichtquelle steht, bezogen auf die Temperatur, die ein schwarzer Körper haben müsste, um der jeweiligen Lichtquelle zu entsprechend [Einheit: Kelvin (K)]. Lichtfarbe oder Farbtemperatur werden als sich voneinander unterscheidend angesehen, wenn die Wellenlänge des Emissionsmaximums des Spektrums einer Gruppe von LEDs von der Wellenlänge des Emissionsmaximums des Spektrums einer anderen Gruppe von LEDs um mindestens 10 nm, insbesondere um mindestens 20 nm, abweicht bzw. wenn zwischen dem Farbeindruck einer Gruppe von LEDs und dem Farbeindruck einer anderen Gruppe von LEDs mindestens 500 K, insbesondere mindestens 1000 K, liegen.

In einer bevorzugten Ausführungsform umfassen die mindestens zwei Gruppen von LEDs unterschiedlicher Lichtfarbe und/oder Farbtemperatur, welche über mindestens einen gemeinsamen Kanal der Basisplatine und/oder mindestens einen gemeinsamen Kanal der Ergänzungsplatine gesteuert werden, mindestens eine Gruppe von LEDs einer Lichtfarbe im Bereich von größer gleich 380 nm bis kleiner gleich 500 nm, bevorzugt im Bereich von größer gleich 420 nm bis kleiner gleich 490 nm, besonders bevorzugt größer gleich 450 nm bis kleiner gleich 480 nm. Besonders bevorzugt umfassen die mindestens zwei Gruppen von LEDs unterschiedlicher Lichtfarbe und/oder Farbtemperatur mindestens eine erste Gruppe von LEDs einer Lichtfarbe im Bereich von größer gleich 380 nm bis kleiner gleich 500 nm, bevorzugt im Bereich von größer gleich 420 nm bis kleiner gleich 490 nm, besonders bevorzugt größer gleich 450 nm bis kleiner gleich 480 nm, und mindestens eine zweite Gruppe von LEDs einer Lichtfarbe im Bereich von größer gleich 380 nm bis kleiner gleich 500 nm, bevorzugt im Bereich von größer gleich 420 nm bis kleiner gleich 490 nm, besonders bevorzugt größer gleich 450 nm bis kleiner gleich 480 nm, oder mindestens eine zweite Gruppe von weißen LEDs einer Farbtemperatur, die im CIE-Farbraum einem Farbort mit den Koordinaten x = 0,37 ± 0,1 und y = 0,44 ± 0,1, insbesondere x = 0,37 und y = 0,44, entspricht. Somit weist die Basisplatine und/oder die Ergänzungsplatine mindestens eine Gruppe von LEDs mit blauer Lichtfarbe auf, welche vorzugsweise über mindestens einen gemeinsamen Kanal mit mindestens einer Gruppe von LEDs mit ebenfalls blauer Lichtfarbe einer abweichenden Wellenlänge des Emissionsmaximums des Spektrums oder mit mindestens einer Gruppe von weißen LEDs gesteuert wird.

In diesem Sinne ist es erfindungsgemäß bevorzugt, wenn die mindestens eine Basisplatine und/oder die mindestens eine Ergänzungsplatine mindestens eine Gruppe, vorzugsweise mindestens zwei Gruppen, von im Wesentlichen monochromatischen LEDs einer Lichtfarbe im Bereich von größer gleich 380 nm bis kleiner gleich 750 nm und mindestens eine Gruppe, vorzugsweise mindestens zwei, insbesondere drei Gruppen, von weißen LEDs, insbesondere einer Farbtemperatur im Bereich von größer gleich 2500 K bis kleiner gleich 7000 K, vorzugsweise im Bereich von größer gleich 2700 K bis kleiner gleich 4000 K und/oder größer gleich 3000 K bis kleiner gleich 6500 K, wie 3000 ± 500 K und/oder 6500 ± 500 K, aufweist. Dabei wird unter einer im Wesentlichen monochromatischen LED eine LED mit einer im Wesentlichen einfarbigen Lichtfarbe verstanden, bei der lediglich ein schmaler Wellenlängenbereich bzw. eine einzelne Wellenlänge mit einem Toleranzbereich von ± 5 nm für das Emissionsmaximum des Spektrums anzugeben ist. So liegt die Lichtfarbe der mindestens einen Gruppe von im Wesentlichen monochromatischen LEDs vorzugsweise im Bereich von größer gleich 440 nm bis kleiner gleich 460 nm (tiefblau), im Bereich von größer gleich 460 nm bis kleiner gleich 480 nm (blau), im Bereich von 495 nm bis kleiner gleich 515 nm (grün), im Bereich von größer gleich 650 nm bis kleiner gleich 670 nm (rot) und/oder im Bereich von größer gleich 720 nm bis kleiner gleich 740 nm (fernrot). Gleichzeitig liegt die Farbtemperatur der mindestens eine Gruppe von weißen LEDs, insbesondere mit einem kontinuierlichen Farbspektrum, im Bereich von größer gleich 2700 K bis kleiner gleich 3300 K und/oder im Bereich von größer gleich 6200 K bis kleiner gleich 6800 K. Ferner kann die mindestens eine Gruppe von weißen LEDs eine Farbtemperatur, die im CIE-Farbraum einem Farbort mit den Koordinaten x = 0,37 ± 0,1 und y = 0,44 ± 0,1, insbesondere x = 0,37 und y = 0,44, entspricht, aufweisen.

In einer besonders bevorzugten Ausführungsform sind die in Gruppen von LEDs gleicher Lichtfarbe und/oder gleicher Farbtemperatur eingeteilten LEDs der mindestens einen Basisplatine gruppenweise über mindestens vier voneinander unabhängige Kanäle K1, K2, K3, K4 und optional die in Gruppen von LEDs gleicher Lichtfarbe und/oder gleicher Farbtemperatur eingeteilten LEDs der mindestens einen Ergänzungsplatine gruppenweise über mindestens vier voneinander unabhängige Kanäle K5, K6, K7, K8 steuerbar, wobei vorzugsweise
- der Kanal K1 zur Steuerung von mindestens zwei Gruppen G1, G2 von LEDs einer Lichtfarbe im Bereich von größer gleich 420 nm bis kleiner gleich 490 nm, und/oder
- der Kanal K2 zur Steuerung von mindestens einer Gruppe G3 von LEDs einer Lichtfarbe im Bereich von größer gleich 700 nm bis kleiner gleich 750 nm, und/oder
- der Kanal K3 zur Steuerung von mindestens einer Gruppe G4 von LEDs einer Farbtemperatur von größer gleich 6000 K bis kleiner gleich 7000 K, und/oder
- der Kanal K4 zur Steuerung von mindestens einer Gruppe G5 von LEDs einer Lichtfarbe im Bereich von größer gleich 630 nm bis kleiner gleich 700 nm, und/oder
- der Kanal K5 zur Steuerung von mindestens einer Gruppe G6 von LEDs einer Lichtfarbe im Bereich von größer gleich 420 nm bis kleiner gleich 490 nm und mindestens einer Gruppe G7 von LEDs einer Farbtemperatur, die im CIE-Farbraum einem Farbort mit den Koordinaten x = 0,37 ± 0,1 und y = 0,44 ± 0,1, insbesondere x = 0,37 und y = 0,44, entspricht, und/oder
- der Kanal K6 zur Steuerung von mindestens einer Gruppe G8 von LEDs einer Lichtfarbe im Bereich von größer gleich 490 nm bis kleiner gleich 560 nm, und/oder
- der Kanal K7 zur Steuerung von mindestens einer Gruppe G9 von LEDs einer Farbtemperatur von größer gleich 2500 K bis kleiner gleich 3500 K, und/oder
- der Kanal K8 zur Steuerung von mindestens eine Gruppe G10 von LEDs einer Farbtemperatur, die im CIE-Farbraum einem Farbort mit den Koordinaten x = 0,37 ± 0,1 und y = 0,44 ± 0,1, insbesondere x = 0,37 und y = 0,44, entspricht, vorgesehen ist.

Vorzugsweise weist die Gruppe G1 eine Lichtfarbe im Bereich von größer gleich 440 nm bis kleiner gleich 460 nm, insbesondere gleich 450 ± 2 nm, die Gruppe G2 eine Lichtfarbe im Bereich von größer gleich 460 nm bis kleiner gleich 480 nm, insbesondere gleich 472 ± 2 nm, die Gruppe G3 eine Lichtfarbe im Bereich von größer gleich 720 nm bis kleiner gleich 740 nm, insbesondere gleich 730 ± 2 nm, die Gruppe G4 eine Farbtemperatur im Bereich von größer gleich 6200 K bis kleiner gleich 6800 K, insbesondere gleich 6500 K, die Gruppe G5 eine Lichtfarbe im Bereich von größer gleich 650 nm bis kleiner gleich 670 nm, insbesondere gleich 660 ± 2 nm, die Gruppe G6 eine Lichtfarbe im Bereich von größer gleich 460 nm bis kleiner gleich 480 nm, insbesondere gleich 472 ± 2 nm, die Gruppe G8 eine Lichtfarbe im Bereich von größer gleich 495 nm bis kleiner gleich 515 nm, insbesondere gleich 505 ± 2 nm, und/oder die Gruppe G9 eine Farbtemperatur im Bereich von größer gleich 2700 K bis kleiner gleich 3300 K, insbesondere gleich 3000 K, auf. Dabei kann es erfindungsgemäß bevorzugt sein, wenn die Gruppen G2 und G6 hinsichtlich ihrer Lichtfarbe und/oder wenn die Gruppen G7 und G10 hinsichtlich ihrer Farbtemperatur übereinstimmen.

Besonders bevorzugt ist darüber hinaus mindestens ein Kanal der Basisplatine und/oder der Ergänzungsplatine, insbesondere der Kanal K5, zur Steuerung von mindestens zwei Gruppen von LEDs, insbesondere mindestens einer Gruppe G6 von LEDs und mindestens einer Gruppe G7 von LEDs vorgesehen, deren kombinierte Farbtemperatur größer gleich 8000 K bis kleiner gleich 9500 K, vorzugsweise größer gleich 8500 K bis kleiner gleich 9100 K, insbesondere 8800 K, beträgt

Insbesondere kann es erfindungsgemäß besonders bevorzugt sein, wenn sich die die mindestens zwei Gruppen von LEDs unterschiedlicher Lichtfarbe und/oder Farbtemperatur, welche über mindestens einen gemeinsamen Kanal der Basisplatine gesteuert werden, vorzugsweise die Gruppen G1 und G2 der Basisplatine, und die mindestens zwei Gruppen von LEDs unterschiedlicher Lichtfarbe und/oder Farbtemperatur, welche über mindestens einen gemeinsamen Kanal der Ergänzungsplatine gesteuert werden, insbesondere die Gruppen G5 und G6 der Ergänzungsplatine, voneinander unterscheiden. Das heißt, dass sich vorzugsweise die Basisplatine und die Ergänzungsplatine voneinander unterscheiden.

In einer weiter bevorzugten Ausführungsform umfasst
- die Gruppe G1 gemeinsam mit der Gruppe G2 und optional die Gruppe G6 gemeinsam mit der Gruppe G7 größer gleich 9 bis kleiner gleich 25, vorzugsweise größer gleich 14 bis kleiner gleich 21, insbesondere 17, LEDs, und/oder
- die Gruppe G3 und optional die Gruppe G8 größer gleich 7 bis kleiner gleich 15, insbesondere 11, LEDs, und/oder
- die Gruppe G4 und optional die Gruppe G9 größer gleich 18 bis kleiner gleich 26, insbesondere 22, LEDs, und/oder
- die Gruppe G5 und optional die Gruppe G10 größer gleich 24 bis kleiner gleich 32, insbesondere 28, LEDs.

Vorzugsweise umfasst die Gruppe G1 größer gleich 2 bis kleiner gleich 10, insbesondere 6, LEDs, die Gruppe G2 größer gleich 7 bis kleiner gleich 15, insbesondere 11, LEDs, die Gruppe G6 größer gleich 3 bis kleiner gleich 11, insbesondere 7, LEDs, und/oder die Gruppe G7 größer gleich 6 bis kleiner gleich 14, insbesondere 10, LEDs. Dabei ist vorzugsweise die Anzahl der LEDs in den Gruppen G1 und G2 sowie G6 und G7, G3 sowie G8, G4 sowie G9 und/oder G5 sowie G10 jeweils gleich.

Somit ist ein erfindungsgemäß besonders bevorzugten Platinenmodul wie folgt aufgebaut:

| Lichtfarbe/ Farbtemperatur | 450 nm ± 5 nm | 470 nm ± 5 nm | 730 nm ± 5 nm | 6500 K ± 500 K | 660 nm ± 5 nm | x =0,37 ± 0,1 y = 0,44 ± 0,1 | 505 nm ± 5 nm | 3000 K ± 500 K |
|---|---|---|---|---|---|---|---|---|
| Basisplatine: | | | | | | | | |
| K1 | **G1 [6]** | **G2** [11] | | | | | | |
| K2 | | | **G3** [11] | | | | | |
| K3 | | | | **G4** [22] | | | | |
| K4 | | | | | **G5** [28] | | | |

| Ergänzungsplatine: | | | | | | | | |
|---|---|---|---|---|---|---|---|---|
| K5 (8800 K) | | **G6** [7] | | | | **G7** [10] | | |
| K6 | | | | | | | **G8** [11] | |
| K7 | | | | | | | | **G9** [22] |
| K8 | | | | | | **G10** [28] | | |

| | | | | | | | | |
|---|---|---|---|---|---|---|---|---|
| [Anzahl an LEDs] | | | | | | | | |

Das Platinenmodul umfasst eine Basisplatine und optional eine Ergänzungsplatine. Die Anzahl der zur jeweiligen Gruppe gehörigen LEDs ist in eckigen Klammern dargestellt.

In einer bevorzugten Ausführungsform des erfindungsgemäßen Platinenmoduls werden zudem die Kanäle K1, K2 und optional die Kanäle K5, K6 mit einem Eingangsstrom von 350 mA und die Kanäle K3, K4 und optional die Kanäle K7, K8 mit einem Eingangsstrom von 700 mA betrieben, wobei vorzugsweise die Vorwärtsspannung
- für den Kanal K1 größer gleich 48 V bis kleiner gleich 58 V, insbesondere 53 V, und/oder
- für den Kanal K2 größer gleich 17 V bis kleiner gleich 27 V, insbesondere 22 V, und/oder
- für den Kanal K3 größer gleich 26 V bis kleiner gleich 36 V, insbesondere 31 V, und/oder
- für den Kanal K4 größer gleich 25 V bis kleiner gleich 35 V, insbesondere 30 V, und/oder
- für den Kanal K5 größer gleich 44 V bis kleiner gleich 54 V, insbesondere 49 V, und/oder
- für den Kanal K6 größer gleich 31 V bis kleiner gleich 41 V, insbesondere 36 V, und/oder
- für den Kanal K7 größer gleich 26 V bis kleiner gleich 36 V, insbesondere 31 V, und/oder
- für den Kanal K8 grö0er gleich 36 V bis kleiner gleich 46 V, insbesondere 41 V, beträgt.

Überdies sind bei einem besonders bevorzugten Platinenmodul die durch die Kanäle K1, K2 und optional die Kanäle K5, K6 gesteuerten LEDs in Serie und die durch die Kanäle K3, K4 und optional die Kanäle K7, K8 gesteuerten LEDs in zwei Reihen parallelgeschaltet.

In einer weiter bevorzugten Ausführungsform wird die von dem Platinenmodul bereitgestellte photobiologisch aktive Strahlung
- zu 5 bis 25 % von den vom Kanal K1 und optional vom Kanal K5 gesteuerten LEDs, und/oder
- zu 0 bis 15 % von den vom Kanal K2 und optional vom Kanal K6 gesteuerten LEDs, und/oder
- zu 10 bis 35 % von den vom Kanal K3 und optional vom Kanal K7 gesteuerten LEDs, und/oder
- zu 15 bis 45 % von den vom Kanal K4 und optional vom Kanal K8 gesteuerten LEDs zur Verfügung gestellt, basierend auf einer im Bereich von 280 nm bis 800 nm gemessen Gesamtstrahlung von 100 %.

Die gemessenen prozentualen Anteile kommen durch die getrennte Messung der einzelnen Kanäle zustande, indem die Intensität des betreffenden Kanals auf 100 % Strahlung gesetzt und die Intensität der restlichen Kanäle bei 0 % Strahlung belassen wurde und anschließend die jeweils gemessene photobiologisch aktive Strahlung in Relation zur photobiologisch aktiven Gesamtstrahlung bei 100 % Intensität aller Kanäle der Basisplatine und/oder der Ergänzungsplatine gesetzt wurde. Im Einzelnen trägt dabei der Kanal K1 bevorzugt 5 bis 15 %, besonderes bevorzugt 9 bis 12 %, der Kanal K2 bevorzugt 0,1 bis 10 %, besonders bevorzugt 4 bis 7 %, der Kanal K3 bevorzugt 10 bis 20 %, besonders bevorzugt 15 bis 18 %, der Kanal K4 bevorzugt 15 bis 25 %, besonders bevorzugt 17 bis 20 %, der Kanal K5 bevorzugt 5 bis 15 %, besonders bevorzugt 10 bis 13 %, der Kanal K6 bevorzugt 0,1 bis 10 %, besonders bevorzugt 2 bis 5 %, der Kanal K7 bevorzugt 10 bis 20 %, besonders bevorzugt 13 bis 16 %, und/oder der Kanal K8 bevorzugt 15 bis 25 %, besonders bevorzugt 19 bis 22 %, zur photobiologisch aktiven Gesamtstrahlung bei. Insbesondere wird durch die mindestens eine Basisplatine und die mindestens eine Ergänzungsplatine jeweils die Hälfte der von dem Platinenmodul bereitgestellten photobiologisch aktiven Strahlung zur Verfügung gestellt.

In diesem Zusammenhang ist ein Platinenmodul erfindungsgemäß besonders bevorzugt, bei dem die von dem Platinenmodul bereitgestellte photobiologisch aktive Strahlung eine Photonenflussdichte von größer gleich 100 µmol/m²s, insbesondere größer gleich 100 µmol/m²s bis kleiner gleich 1000 µmol/m²s bevorzugt eine elektronische Photonenflussdichte von größer gleich 500 µmol/m²s, besonders bevorzugt größer gleich 700 µmol/m²s, aufweist. Die Photonenflussdichte (PFD) gibt die elektromagnetische Strahlung wieder, die auf einer bestimmten Fläche, vorzugsweise ein Blatt der zu belichtenden Pflanze oder Pflanzkultur, auftrifft. So wird durch die Photonenflussdichte die Anzahl an Photonen angegeben, welche innerhalb einer Sekunde auf einer Fläche auftreffen (gemessen in µmol/m²s).

In einer besonders bevorzugten Ausführungsform teilt sich die von dem Platinenmodul bereitgestellte photobiologisch aktive Strahlung auf die Wellenlängenbereiche a) 400 bis 500 nm (blau) und d) 600 bis 700 nm (rot) in einem Verhältnis a : d von 1 : 1 bis 1 : 2, insbesondere in einem Verhältnis a : d von 1 : 1,3 bis 1 : 1,6, und auf die Wellenlängenbereiche b) 500 bis 550 nm (grün) und c) 550 bis 600 nm (gelb) in einem Verhältnis b : c von 1 : 1 bis 1 : 1,2 auf, wobei vorzugsweise das Verhältnis der Summe der auf die Wellenlängenbereiche a), b), c) und d) entfallenden photobiologisch aktiven Strahlung zu der auf den Wellenlängenbereich e) 700 bis 800 nm (fernrot) entfallenden photobiologisch aktiven Strahlung 10 : 1 bis 20 : 1, insbesondere 10 : 1 bis 15 : 1, beträgt. Insbesondere beträgt wobei das Verhältnis der Summe der auf die Wellenlängenbereiche a), b), c) und d) entfallenden photobiologisch aktiven Strahlung zu der auf den Wellenlängenbereich e) 700 bis 800 nm entfallenden photobiologisch aktiven Strahlung 10 : 1 bis 20 : 1, insbesondere 10 : 1 bis 15 : 1. Vorzugsweise teilt sich die von dem Platinenmodul bereitgestellte photobiologisch aktive Strahlung auf die Wellenlängenbereich a), b), c), d) und e) in einem Verhältnis a : b : c : d : e von etwa 1,6 : 1 : 1 : 2,3 : 0,4 bei gemeinsamer Verwendung der Basisplatine und der Ergänzungsplatine auf. So ist es erfindungsgemäß besonders bevorzugt, wenn bei der bereitgestellten photobiologisch aktiven Strahlung 20 bis 40 %, vorzugsweise 24 bis 27 % bei gemeinsamer Verwendung der Basisplatine und der Ergänzungsplatine, im Wellenlängenbereich a), 5 bis 20 %, vorzugsweise 14 bis 17 % bei gemeinsamer Verwendung der Basisplatine und der Ergänzungsplatine, im Wellenlängenbereich b), 5 bis 20 %, vorzugsweise 14 bis 17 % bei gemeinsamer Verwendung der Basisplatine und der Ergänzungsplatine, im Wellenlängenbereich c), 30 bis 50 %, vorzugsweise 34 bis 37 % bei gemeinsamer Verwendung der Basisplatine und der Ergänzungsplatine, im Wellenlängenbereich d) und/oder 0,1 bis 10 %, vorzugsweise 6 bis 9 %, im Wellenlängenbereich e) liegen.

In diesem Zusammenhang ist es erfindungsgemäß bevorzugt, wenn der Quotient aus der prozentualen photobiologisch aktiven Strahlung im roten Wellenlängenbereich und der prozentualen photobiologisch aktiven Strahlung im fernroten Wellenlängenbereich (R:FR-Verhältnis) bei größer gleich 1 bis kleiner 10, vorzugsweise größer gleich 2 bis kleiner gleich 8, insbesondere bei größer gleich 2 bis kleiner gleich 3 oder bei größer gleich 2,25 bis kleiner gleich 2,75 bei gemeinsamer Verwendung der Basisplatine und der Ergänzungsplatine, liegt. Das R:FR-Verhältnis bezeichnet das Verhältnis eines entsprechenden Lichtspektrums von Rot ("*red"*) zu Fernrot ("*far red*") und hat große Auswirkungen auf die Photomorphogenese. Es wird im Rahmen der Erfindung in Anlehnung an Smith et al. (1982) auf das Wellenlängenverhältnis 655 - 665 nm zu 725 - 735 nm definiert.

Erfindungsgemäß besonders bevorzugt entfallen bei der bereitgestellten photobiologisch aktiven Strahlung mindestens 6 %, vorzugsweise mindestens 7 %, auf den Wellenlängenbereich 700 bis 800 nm,

Darüber hinaus kann es erfindungsgemäß bevorzugt sein, wenn sich die von dem Platinenmodul bereitgestellte photosynthetisch aktive Strahlung auf die Wellenlängenbereiche a) 400 bis 500 nm (blau) und d) 600 bis 700 nm (rot) in einem Verhältnis a : d von 1 : 1 bis 1 : 2, vorzugsweise in einem Verhältnis a : d von 1 : 1,3 bis 1 : 1,6, und auf die Wellenlängenbereiche b) 500 bis 550 nm (grün) und c) 550 bis 600 nm (gelb) in einem Verhältnis b : c von 1 : 1 bis 1 : 1,2 aufteilt. Vorzugsweise teilt sich die von dem Platinenmodul bereitgestellte photosynthetisch aktive Strahlung auf die Wellenlängenbereiche a), b), c) und d), in einem Verhältnis a : b : c: d von 1,5 bis 4 : 1 : 1 : 2 bis 6, insbesondere in einem Verhältnis a : b : c : d von 1,6 : 1 : 1 : 2,3 bei gemeinsamer Verwendung der Basisplatine und der Ergänzungsplatine, auf. So ist es erfindungsgemäß besonders bevorzugt, wenn bei der bereitgestellten photosynthetisch aktiven Strahlung 20 bis 40 %, vorzugsweise 25 bis 28 % bei gemeinsamer Verwendung der Basisplatine und der Ergänzungsplatine, im Wellenlängenbereich a), 5 bis 20 %, vorzugsweise 15 bis 18 % bei gemeinsamer Verwendung der Basisplatine und der Ergänzungsplatine, im Wellenlängenbereich b), 5 bis 20 %, vorzugsweise 15 bis 18 % bei gemeinsamer Verwendung der Basisplatine und der Ergänzungsplatine, im Wellenlängenbereich c) und/oder 30 bis 55 %, vorzugsweise 37 bis 40 % bei gemeinsamer Verwendung der Basisplatine und der Ergänzungsplatine, im Wellenlängenbereich d) liegen.

Die jeweiligen prozentualen Anteile beziehen sich dabei vorzugsweise auf eine 100%ige Leistung aller zur Steuerung der Gruppen von LEDs des Platinenmoduls vorgesehenen Kanäle, insbesondere auf eine 100%ige Leistung aller acht Kanäle der erfindungsgemäßen Basisplatine und Ergänzungsplatine. Insbesondere lassen sich die prozentualen Anteile durch eine Veränderung der jeweiligen Leistung der einzelnen Kanäle beliebig anpassen, um Licht mit unterschiedlichen spektralen Eigenschaften zu erzeugen. So kann es besonders bevorzugt sein, wenn mithilfe des erfindungsgemäßen Platinenmoduls, insbesondere der Basisplatine und/oder der Ergänzungsplatine, sowohl monochromatische Lichter aus einzelnen Spektralfarben, als auch ein Vollspektrum sowie sonnenähnliches Licht herstellbar ist. Letzteres gelingt insbesondere durch eine Reduzierung der Intensität des Kanals K4.

Die Messung der prozentualen Anteile (spektrale Anteile) wie auch der Photonenflussdichte erfolgte mithilfe des Spektrometers FLAME-S (Ocean Optics) in einem Bereich von 200 bis 850 nm. Der Abstand von der Leuchte zur Messebene betrug etwa 50 cm. Die Auswertung erfolgte mit der Software OceanView 1.6.7 (Ocean Optics).

Ferner ist Gegenstand der vorliegenden Erfindung ein LED-Belichtungssystem zur Bereitstellung von photobiologisch aktiver Strahlung umfassend mindestens eine LED-Leuchte, insbesondere eine fluidkühlbare LED-Leuchte, die mindestens ein erfindungsgemäßes Platinenmodul umfasst. Vorzugsweise umfasst die mindestens eine LED-Leuchte mindestens zwei erfindungsgemäße Platinenmodule, insbesondere mindestens zwei Basisplatinen und optional mindestens zwei Ergänzungsplatinen.

Die mindestens eine LED-Leuchte weist vorzugsweise einen, insbesondere im Wesentlichen quaderförmigen, Körper auf, auf dessen Unterseite das mindestens eine Platinenmodul, insbesondere die mindestens zwei Basisplatinen und optional die mindestens zwei Ergänzungsplatinen, befestigbar ist. An der Oberseite des Körpers kann die mindestens eine LED-Leuchte eine Vielzahl von Kühlfinnen, vorzugsweise in Rippenform bzw. Lamellenform mit einer Beabstandung zueinander von mindestens 0,1 bis 0,5 cm, zur Vergrößerung ihrer Wärme-ableitenden Oberfläche aufweisen. Überdies kann im Inneren des Körpers mindestens ein Fluidkanal zur Leitung eines Kühlfluids ausgebildet sein, welcher optional in seinem Inneren weitere Kühlfinnen aufweist. Der Körper verfügt vorzugsweise in seiner Länge über eine Abmessung von mindestens 10 bis 250 cm, insbesondere von 20 bis 200 cm, und in seiner Breite über eine Abmessung von mindestens 2 bis 100 cm, insbesondere mindestens 5 bis 50 cm. Dabei ist es bevorzugt, wenn Körper aus einem gut wärmeleitenden Material, wie aus einem Metall, einer Legierung oder einem Hybridmaterial umfassend Metall oder eine Legierung mit keramischen Bestandteilen, insbesondere aus Aluminium oder aus einer Aluminiumlegierung, hergestellt ist. ,Vorzugsweise ist der Körper ist ein Strangpressteil.

Das mindestens eine Platinenmodul, insbesondere die mindestens zwei Basisplatinen und optional die mindestens zwei Ergänzungsplatinen, kann über ein vorgegebenes Bohrlochsystem, ein System mit Hinterschnitten oder eine Verklebung flexibel auf dem Körper der mindestens einen LED-Leuchte angebracht werden, vorzugsweise mithilfe von mindestens zwei bis zehn, insbesondere mithilfe von sechs Schrauben. Alternativ kann das Platinenmodul auf dem Kühlkörper verrastet werden. Zur Anpassung des Abstrahlwinkels kann zudem ein Diffusor über dem mindestens einen Platinenmodul angebracht werden. Dieser beträgt vorzugsweise mindestens 90°, vorzugsweise 90° bis 150°, insbesondere mindestens 110° bis 130°.

Das LED-Belichtungssystem umfasst vorzugsweise mindestens zwei LED-Leuchten, insbesondere mindestens fünf bis hundertfünfzig LED-Leuchten, welche über mindestens ein Steuerungsgerät, insbesondere mindestens zwei bis fünfzehn Steuerungsgeräte, steuerbar sind. Dabei können die mindestens zwei LED-Leuchten sowohl miteinander verbunden sein und damit gemeinsam als auch unabhängig voneinander gesteuert werden. Besonders bevorzugt sind einem Steuerungsgerät mindestens zwei bis zwanzig miteinander verbundene oder unabhängige LED-Leuchten zugeordnet, welche in Seite oder in Reihe geschaltet sein können. Die mindestens eine LED-Leuchte kann zudem über eine Steuerungssoftware steuerbar sein.

Das mindestens eine Steuergerät fungiert vorzugsweise als *Gateway* zwischen der Steuerungssoftware, insbesondere einem Klimacomputer, und der mindestens einen LED-Leuchte, wobei bevorzugt ein gängiges Protokoll zur Steuerung von lichttechnischen Betriebsgeräten, insbesondere das *Digital Addressable Lighting Interface* (DALI), verwendet wird. So ist es erfindungsgemäß bevorzugt, wenn das mindestens eine Steuerungsgerät ein DALI-Steuerungsgerät, insbesondere eine DALI-Bridge, ist und in der Lage ist, den Status der mindestens einen LED-Leuchte abzufragen und deren Zustand zu verändern. Dabei werden bevorzugt DALI-Busse zur Interaktion mit der mindestens einen LED-Leuchte eingesetzt. Die Verbindung mit der Steuerungssoftware, insbesondere dem Klimacomputer, erfolgt vorzugsweise über ein *Local Area Network* (LAN).

In diesem Zusammenhang ist es bevorzugt, wenn a) die Beleuchtungsstärke, insbesondere die Photonenflussdichte (PFD), der mindestens einen LED-Leuchte, und/oder b) die Strahlungsleistung, insbesondere der Photonenfluss (PF) als Maß für die von Strahlungsquelle emittierte elektromagnetische Strahlung, gemessen als Anzahl der Photonen, die innerhalb einer Sekunde von der Strahlungsquelle ausgehen, der mindestens einen LED-Leuchte, und/oder c) die Lichtausbeute, insbesondere die Photonenflussausbeute (PFA) als Maß für die elektromagnetische Strahlung, die aus einem Watt zugeführter Leistung erzielt wird, der mindestens einen LED-Leuchte steuerbar ist. Zudem ist es besonderes bevorzugt, wenn d) das Spektrum der mindestens einen LED-Leuchte, vorzugsweise hinsichtlich der Lage und/oder Höhe der Intensitätsmaxima, steuerbar ist, insbesondere indem einzelne Kanäle des mindestens einen Platinenmoduls unabhängig voneinander auf eine Intensität zwischen 0 % und 100 % gesetzt werden. Überdies kann es weiter bevorzugt sein, wenn im Sinne einer Wachstumsphasen- und/oder Pflanzkultur-abhängigen Belichtung e) der zeitliche Schaltzyklus der mindestens einen LED-Leuchte steuerbar ist.

Gleichfalls Gegenstand der vorliegenden Erfindung ist die Verwendung mindestens eines erfindungsgemäßen Platinenmoduls zur Bereitstellung von photobiologisch aktiver Strahlung, insbesondere zur Belichtung von mindestens einem Mitglied aus der Domäne der Eukaryoten, vorzugsweise von mindestens einem Mitglied aus der Klade der Diaphoretickes oder aus der Klade der Amorphea, wie aus der Gruppe der Opisthokonta, insbesondere von mindestens einem Mitglied aus dem Regnum der *Plantae,* umfassend mindestens eine Basisplatine, und optional mindestens eine Ergänzungsplatine mit einer Vielzahl an Leuchtdioden, welche in Gruppen von mindestens zwei Leuchtdioden gleicher Lichtfarbe und/oder gleicher Farbtemperatur eingeteilt und gruppenweise über mindestens zwei voneinander unabhängige Kanäle K1, K2 und/oder K5, K6 steuerbar sind, wobei mindestens ein Kanal der Basisplatine und/oder mindestens ein Kanal der Ergänzungsplatine zur Steuerung von mindestens zwei Gruppen von Leuchtdioden vorgesehen ist, die sich hinsichtlich ihrer Lichtfarbe und/oder Farbtemperatur voneinander unterscheiden, oder eines erfindungsgemäßen LED-Belichtungssystems zur Erzeugung eines Vollspektrums in einem Wellenlängenbereich von 380 bis 780 nm.

Unter dem Begriff Vollspektrum wird im Rahmen der Erfindung ein kontinuierliches Spektrum über den gesamten Wellenlängenbereich zwischen 380 nm und 780 nm, insbesondere über den gesamten Wellenlängenbereich der PBAR bzw. PAR, verstanden, bei dem zwar die Emissionsintensitäten bei den einzelnen Wellenlängen variieren, jedoch niemals 0 werden. Insbesondere ist ein erfindungsgemäßes Vollspektrum ein zusammengesetztes kontinuierliches Spektrum, das mithilfe einer Vielzahl unterschiedlicher LEDs erzeugt wird, insbesondere mithilfe von mindestens drei unterschiedlichen LEDs oder Gruppen von LEDs, bevorzugt mithilfe von mindestens vier oder mindestens fünf unterschiedlichen LEDs oder Gruppen von LEDs, besonders bevorzugt mithilfe von mindestens acht LEDs oder Gruppen von LEDs, insbesondere auf der Basisplatine und/oder der Ergänzungsplatine, wobei die LEDs zusammen ein Licht emittieren, dass alle Spektralfarben im Bereich von 400 bis 750 nm enthält.

Alternativ kann das erfindungsgemäße Vollspektrum derart angepasst werden, dass es sonnenlichtähnlich ist, d.h. dass die spektralen Anteile im Bereich von 400 bis 750 nm denen des Sonnenlichts zum Sonnenzenit (51 ± 10°) im Juni MEZ entsprechen, wobei die maximale Abweichung bei max. 20 % liegt.

Erfindungsgemäß ist ein solches Vollspektrum erhältlich durch die Verwendung eines erfindungsgemäßen Platinenmoduls oder eines erfindungsgemäßen LED-Belichtungssystems. Dabei weist das Vollspektrum im Wellenlängenbereich von 380 bis 780 nm vorzugsweise mindestens drei, insbesondere vier, Intensitätsmaxima auf. Somit ist eine Verwendung besonders bevorzugt, bei der ein Vollspektrum in einem Wellenlängenbereich von 380 bis 780 nm mit Intensitätsmaxima im Bereich von 450 ± 5 nm, 475 ± 5 nm, 663 ± 5 nm und 733 ± 5 nm erzeugt wird.

Darüber hinaus ist es in einer Ausführungsform der erfindungsgemäßen Verwendung bevorzugt, wenn das mindestens eine Platinenmodul oder das LED-Belichtungssystem eine Strahlungsleistung, insbesondere einen Photonenfluss (PF) von größer gleich 500 µmol/s, insbesondere größer gleich 500 µmol/s bis kleiner gleich 3000 µmol/s, bevorzugt eine Strahlungsleistung von größer gleich 700 µmol/s, besonders bevorzugt größer gleich 750 µmol/s, aufweist.

Der Photonenfluss wurde in der Ulbricht-Kugel ISP1000 (Instrument Systems) mit einem Durchmesser von 1 m (max. Modulgröße ca. 50 cm) bestimmt. Dazu wurde zunächst im Rahmen einer Selbstabsorptions-Korrektur die kalibrierte Ulbricht-Kugel ohne Messaufbau vermessen und anschließend mit dem ausgeschalteten LED-Modul eine Referenzmessung in der Ulbricht-Kugel getätigt. Im Anschluss wurde das Spektrum des LED-Moduls direkt nach dem Einschalten vermessen. Die Strahlungsleistung wurde zunächst in der Einheit Watt/Nanometer mit einer Auflösung von 1 nm zwischen 350 und 1000 nm erhalten und anschließend in µmol/s umgerechnet. Zur Messung wurde das Spektrometer CAS 140CT (Instruments Systems) verwendet. Die Raumtemperatur während der Messung lag bei 20° C.

Ein weiterer Gegenstand der vorliegenden Erfindung ist zudem eine Software zur Steuerung mindestens eines erfindungsgemäßen Platinenmoduls zur Bereitstellung von photobiologisch aktiver Strahlung umfassend mindestens eine Basisplatine, und optional mindestens eine Ergänzungsplatine mit einer Vielzahl an LEDs, welche in Gruppen von mindestens zwei LEDs gleicher Lichtfarbe und/oder gleicher Farbtemperatur eingeteilt und gruppenweise über mindestens zwei voneinander unabhängige Kanäle K1, K2 und/oder K5, K6 steuerbar sind, wobei mindestens ein Kanal der Basisplatine und/oder mindestens ein Kanal der Ergänzungsplatine zur Steuerung von mindestens zwei Gruppen von LEDs vorgesehen ist, die sich hinsichtlich ihrer Lichtfarbe und/oder Farbtemperatur voneinander unterscheiden, oder eines erfindungsgemäßen LED-Belichtungssystems, welche die Strahlungsleistung, insbesondere den Photonenfluss (PF), die Beleuchtungsstärke, insbesondere die Photonenflussdichte (PFD), die Lichtausbeute, insbesondere die Photonenflussausbeute (PFA), das Spektrum, vorzugsweise hinsichtlich der Lage und/oder Höhe der Intensitätsmaxima, und/oder den zeitlichen Schaltzyklus der LEDs steuert. Überdies kann es bevorzugt sein, wenn die Software ein Dimmen des mindestens einen Platinenmoduls bzw. des LED-Belichtungssystems ermöglicht, insbesondere unter Verwendung einer Amplitudendimmung zwischen 1 % und 100 % Leistung oder eines Hybrid-Dimmverfahrens, um durch Amplitudensteuerung ein flackerfreies Betreiben der LEDs zwischen 30 % und 100 % Leistung zu erlauben und bis zu einer Leistung von 30 % eine Dimmung mittels Pulsweiten-Modulation zu ermöglichen.

Vorzugsweise kann das Spektrum des mindestens einen Platinenmoduls oder des LED-Belichtungssystems mithilfe der Software hinsichtlich Intensität und Verhältnis der Spektralfarben beliebig zusammengesetzt werden. So ist der Anwender in der Lage die einzelnen Kanäle, insbesondere die Kanäle K1, K2, K3, und/oder K4 sowie K5, K6, K7 und/oder K8, unabhängig voneinander anzusteuern und stufenlos mit einer Intensität von 0 % bis 100 % zu betreiben. Das erfindungsgemäß bevorzugte Vollspektrum in einem Wellenlängenbereich von 380 bis 780 nm ist dabei erhältlich, indem jeder der Kanäle K1, K2, K3, K4, K5, K6, K7 und K8 auf jeweils 100 % Intensität gesetzt wird.

### Ausführungsbeispiele:

Erzeugung eines Vollspektrums mittels einer Basisplatine mit den Gruppen G1 (451 nm, 6 LEDs) / G2 (475 nm, 11 LEDs) [K1] sowie G3 (730 nm, 11 LEDs) [K2], G4 (6500 K, 22 LEDs) [K3] und G5 (660 nm, 28 LEDs) [K4], und optional einer Ergänzungsplatine mit den Gruppen G6 (475 nm, 6 LEDs) / G7 (x = 0,37, y = 0,44 (CIE), 10 LEDs) [K5] sowie G8 (505 nm, 11 LEDs) [K6], G9 (3000 K, 22 LEDs) [K7]und G10 (x = , y = 0,44 (CIE), 28 LEDs) [K8].

**Spektrale Charakteristik (Basisplatine)**

| Peaks | Maximum [nm] | Toleranzbereich (± 5 nm) [nm] |
|---|---|---|
| 1 | 445 | 440 - 450 |
| 2 | 475 | 470 - 780 |
| 3 | 662 | 657 - 667 |
| 1 | 729 | 724 - 734 |

| | UV-A | UV-B | Blau | Grün | Gelb | Rot | Fern rot |
|---|---|---|---|---|---|---|---|
| Wellenlänge [nm] | 280 -315 | 315-400 | 400 -500 | 500 - 550 | 550 -600 | 600 - 700 | 700 - 800 |
| | | | | | | | |
| %PAR [400 - 700 nm] | | | 32,7 | 8,1 | 8,9 | 50,2 | |
| Toleranz (± 20 %) | | | 6,5 | 1,6 | 1,8 | 10,0 | |
| | | | | | | | |
| %PBAR [280 - 800 nm] | | | 29,9 | 7,4 | 8,2 | 45,8 | 8,5 |
| Toleranz (± 20 %) | | | 6,0 | 1,5 | 1,6 | 9,2 | |

R:FR (655-665 nm : 725-735 nm) = 6,62 (± 1,32)

**Spektrale Charakteristik (Basisplatine und Ergänzungsplatine)**

| Peaks | Maximum [nm] | Toleranzbereich (± 5 nm) [nm] |
|---|---|---|
| 1 | 450 | 455 - 465 |
| 2 | 475 | 470 - 780 |
| 3 | 663 | 658 - 668 |
| 1 | 733 | 728 - 738 |

| | UV-A | UV-B | Blau | Grün | Gelb | Rot | Fern rot |
|---|---|---|---|---|---|---|---|
| Wellenlänge [nm] | 280 -315 | 315-400 | 400 -500 | 500 - 550 | 550 -600 | 600 - 700 | 700 - 800 |
| | | | | | | | |
| %PAR [400 - 700 nm] | | | 26,6 | 16,4 | 16,6 | 38,5 | |
| Toleranz (± 20 %) | | | 5,3 | 3,3 | 3,3 | 7,7 | |
| | | | | | | | |
| %PBAR [280 - 800 nm] | | | 25,1 | 15,5 | 15,7 | 36,4 | 7,2 |
| Toleranz (± 20 %) | | | 5,0 | 3,1 | 3,1 | 7,3 | |

| | | | | | | | |
|---|---|---|---|---|---|---|---|
| R:FR (655 - 665 nm : 725 - 735 nm) = 2,55 (± 0,51) | | | | | | | |

Getrennte Messung der einzelnen Kanäle, wobei die Intensität des betreffenden Kanals auf 100 % Strahlung gesetzt und die Intensität der restlichen Kanäle bei 0 % Strahlung belassen wurde. K1

| 100 % 450/470 nm | µmol/m²s | % PBAR [280- 800nm] |
|---|---|---|
| 280-315nm_UV-B:251 | 0,08 | 0,1 |
| 315-400nm_UV-A:247 | 0,17 | 0,2 |
| 400-500nm_Blue:235 | 75,12 | 94,9 |
| 500-600nm_Green/Yellow:236 | 3,21 | 4,1 |
| 600-700nm_Red:237 | 0,27 | 0,3 |
| 700-800nm_Far-Red:238 | 0,34 | 0,4 |
| PAR_400-700nm:240 | 78,6 | 99,3 |
| PBAR_280-800nm:243 | 79,19 | |

**K2**

| 100 % 730 nm | µmol/m²s | % PBAR [280 - 800nm] |
|---|---|---|
| 280-315nm UV-B:251 | 0 | 0,0 |
| 315-400nm UV-A:247 | 0,03 | 0,1 |
| 400-500nm Blue:235 | 0,1 | 0,2 |
| 500-600nm Green/Yellow:236 | 0,14 | 0,3 |
| 600-700nm Red:237 | 3,69 | 8,7 |
| 700-800nm Far-Red:238 | 38,32 | 90,6 |
| PAR 400-700nm:240 | 3,93 | 9,3 |
| PBAR 280-800nm:243 | 42,28 | |

**K3**

| 100 % 6500 K | µmol/m²s | % PBAR [280 - 800nm] |
|---|---|---|
| 280-315nm UV-B:251 | 0,08 | 0,1 |
| 315-400nm UV-A:247 | 0,19 | 0,2 |
| 400-500nm Blue:235 | 41,77 | 33,0 |
| 500-600nm Green/Yellow:236 | 55,91 | 44,2 |
| 600-700nm Red:237 | 26,08 | 20,6 |
| 700-800nm Far-Red:238 | 2,54 | 2,0 |
| PAR 400-700nm:240 | 123,76 | 97,8 |
| PBAR 280-800nm:243 | 126,57 | |

**K4**

| 100 % 660 nm | µmol/m²s | % PBAR [280 - 800nm] |
|---|---|---|
| 280-315nm UV-B:251 | 0 | 0,0 |
| 315-400nm UV-A:247 | 0,04 | 0,0 |
| 400-500nm Blue:235 | 0,07 | 0,1 |
| 500-600nm Green/Yellow:236 | 0,27 | 0,2 |
| 600-700nm Red:237 | 135,64 | 99,7 |
| 700-800nm Far-Red:238 | 0 | 0,0 |
| PAR 400-700nm:240 | 135,98 | 100,0 |
| PBAR_280-800nm:243 | 136,02 | |

**K5**

| 100 % 8800 K | µmol/m²s | % PBAR [280 - 800nm] |
|---|---|---|
| 280-315nm_UV-B:251 | 0,06 | 0,1 |
| 315-400nm_UV-A:247 | 0,16 | 0,2 |
| 400-500nm_Blue:235 | 34,57 | 40,7 |
| 500-600nm_Green/Yellow:236 | 33,21 | 39,1 |
| 600-700nm_Red:237 | 14,92 | 17,5 |
| 700-800nm_Far-Red:238 | 2,12 | 2,5 |
| PAR_400-700nm:240 | 82,7 | 97,2 |
| PBAR_280-800nm:243 | 85,04 | |

**K6**

| 100 % 503 nm | µmol/m²s | % PBAR [280-800nm] |
|---|---|---|
| 280-315nm_UV-B:251 | 0 | 0,0 |
| 315-400nm_UV-A:247 | 0,01 | 0,0 |
| 400-500nm_Blue:235 | 8,86 | 36,5 |
| 500-600nm_Green/Yellow:236 | 15,3 | 63,0 |
| 600-700nm_Red:237 | 0,12 | 0,5 |
| 700-800nm_Far-Red:238 | 0 | 0,0 |
| PAR_400-700nm:240 | 24,28 | 100,0 |
| PBAR_280-800nm:243 | 24,29 | |

**K7**

| 100 % 3000 K | µmol/m²s | % PBAR [280-800nm] |
|---|---|---|
| 280-315nm UV-B:251 | 0,05 | 0,0 |
| 315-400nm UV-A:247 | 0,13 | 0,1 |
| 400-500nm Blue:235 | 11,59 | 10,5 |
| 500-600nm Green/Yellow:236 | 35,96 | 32,7 |
| 600-700nm Red:237 | 52,27 | 47,6 |
| 700-800nm Far-Red:238 | 9,86 | 9,0 |
| PAR 400-700nm:240 | 99,82 | 90,9 |
| PBAR 280-800nm:243 | 109,86 | |

**K8**

| 100 % EQ-W | µmol/m²s | % PBAR [280-800nm] |
|---|---|---|
| 280-315nm UV-B:251 | 0,14 | 0,1 |
| 315-400nm UV-A:247 | 0,28 | 0,2 |
| 400-500nm Blue:235 | 20,7 | 13,5 |
| 500-600nm Green/Yellow:236 | 86,04 | 56,1 |
| 600-700nm Red:237 | 40,64 | 26,5 |
| 700-800nm Far-Red:238 | 5,59 | 3,6 |
| PAR 400-700nm:240 | 147,38 | 96,1 |
| PBAR 280-800nm:243 | 153,39 | |

**Gesamtstrahlung**

| 100 % alle Kanäle | µmol/m²s | % PBAR [280-800nm] |
|---|---|---|
| 280-315nm_UV-B:251 | 0,48 | 0,1 |
| 315-400nm_UV-A:247 | 0,95 | 0,1 |
| 400-500nm_Blue:235 | 189,73 | 25,5 |
| 500-600nm_Green/Yellow:236 | 225,77 | 30,3 |
| 600-700nm_Red:237 | 269,48 | 36,2 |
| 700-800nm_Far-Red:238 | 57,88 | 7,8 |
| PAR_400-700nm:240 | 689,05 | 92,0 |
| PBAR_280-800nm:243 | 749,22 | |

**Anteile der einzelnen Kanäle an der Gesamtstrahlung**

| | 100 % 450/470 nm | 100 % 730 nm | 100 % 6500 K | 100 % 660 nm | 100 % 8800 K | 100 % 505 nm | 100 % 3000 K | 100 % EQ-W |
|---|---|---|---|---|---|---|---|---|
| PBAR | 79,19 | 45,28 | 126,57 | 136,02 | 85,04 | 24,29 | 109,86 | 153,39 |
| % | 10,5 | 5,6 | 16,7 | 18,0 | 11,2 | 3,2 | 14,5 | 20,3 |

Die Erfindung wird anhand der Figuren näher erläutert, ohne die Erfindung auf diese Ausführungsbeispiele zu begrenzen. Es zeigen:
- **Fig. 1:**: ein erfindungsgemäßes Platinenmodul umfassend eine Basis- oder Ergänzungsplatine mit einer Vielzahl an LEDs, die über vier Kanäle K1, K2, K3, K4 oder K5, K6, K7, K7 steuerbar sind
- **Fig. 2a/b:**: einen Schaltplan für ein erfindungsgemäßes Platinenmodul umfassend eine Basis- oder Ergänzungsplatine aufgeteilt nach den Kanälen K1, K5 / K2, K6 / K3, K7 / K4, K8
- **Fig. 3a,b:**: je ein mittels des erfindungsgemäßen Platinenmoduls erzeugtes Vollspektrum in einem Wellenlängenbereich von 380 bis 780 nm

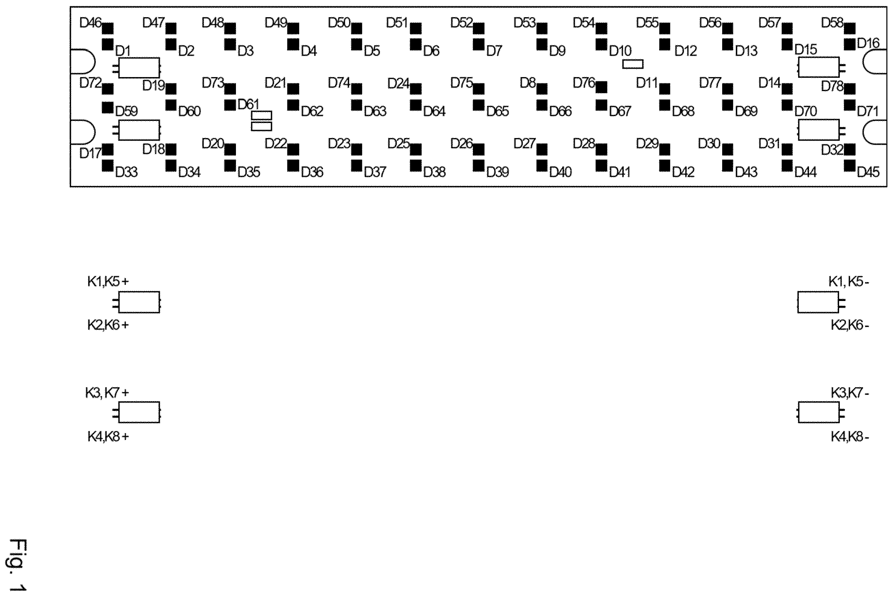

**Figur 1** zeigt eine Basisplatine oder eine Ergänzungsplatine des erfindungsgemäßen Platinenmoduls mit 78 LEDs (D1 bis D78), die in 6 Reihen und 13 Spalten einer Matrix angeordnet sind. Die LEDs sind jeweils in 5 Gruppen G1, G2, G3, G4, G5 oder G6, G7, G8, G9, G10 von LEDs gleicher Lichtfarbe bzw. gleicher Farbtemperatur eingeteilt.

**Basisplatine:**

| Gruppe | LEDs | Lichtfarbe bzw. Farbtemperatur |
|---|---|---|
| G1 | D60, D62, D64, D66, D68, D70 | 440 - 460 nm |
| G2 | D8, D11, D21, D24, D59, D61, D63, D65, D67, D69, D71 | 460 - 480 nm |
| G3 | D12, D14, D19, D22, D72-D78 | 720 - 740 nm |
| G4 | D1-D3, D5-D7, D9, D10, D13, D15-D18, D20, D23, D25-D28, D30-D32 | 6200 - 6800 K |
| G5 | D4, D29, D33-D58 | 650 - 670 nm |

**Ergänzungsplatine:**

| Gruppe | LEDs | Lichtfarbe bzw. Farbtemperatur |
|---|---|---|
| G6 | D59, D61, D63, D65, D67, D69, D71 | 460 - 480 nm |
| G7 | D8, D11, D21, D24, D60, D62, D64, D66, D68, D70 | x = 0,37, y = 0,44 (CIE) |
| G8 | D12, D14, D19, D22, D72-D78 | 495-515 nm |
| G9 | D1-D3, D5-D7, D9, D10, D13, D15-D18, D20, D23, D25-D28, D30-D32 | 2700 - 3300 K |
| G10 | D4, D29, D33-D58 | x = 0,37, y = 0,44 (CIE) |

Die Gruppen der Basisplatine können über vier unabhängige Kanäle K1, K2, K3, K4 oder die Gruppen der Ergänzungsplatine können über vier unabhängige Kanäle K5, K6, K7, K8 gesteuert werden. Aus diesem Grund weist die Basisplatine oder die Ergänzungsplatine ferner jeweils acht elektrische Anschlüsse auf, welche den Pluspol der Kanäle K1/K2 und K5/K6 (K1 + bzw. K5 + und K2 + bzw. K6 +) sowie der Kanäle K3/K4 und K7/K8 (K3 + bzw. K7 + und K4 + bzw. K8 +) und den Negativpol der Kanäle K1/K2 und K5/K6 (K1- bzw. K5 - und K2 - bzw. K6 -) sowie der Kanäle K3/K4 und K7/K8 (K3 - bzw. K7 - und K4 - bzw. K8 -) umfassen.

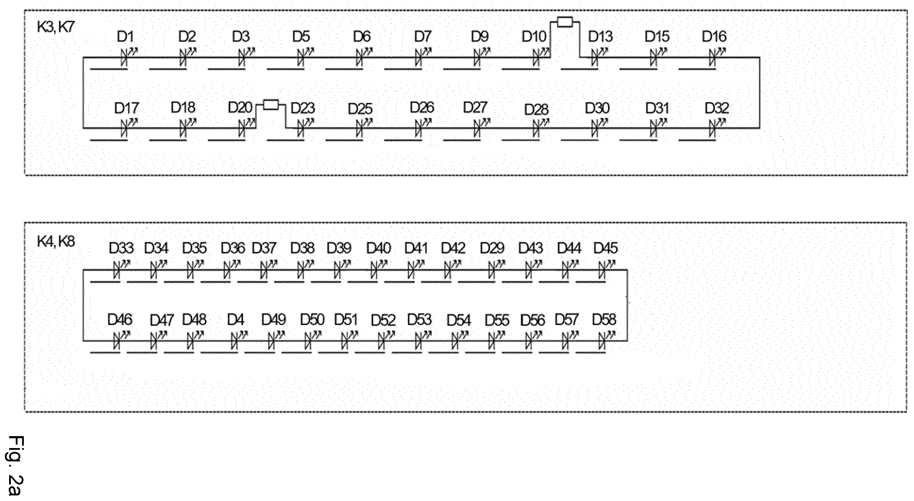

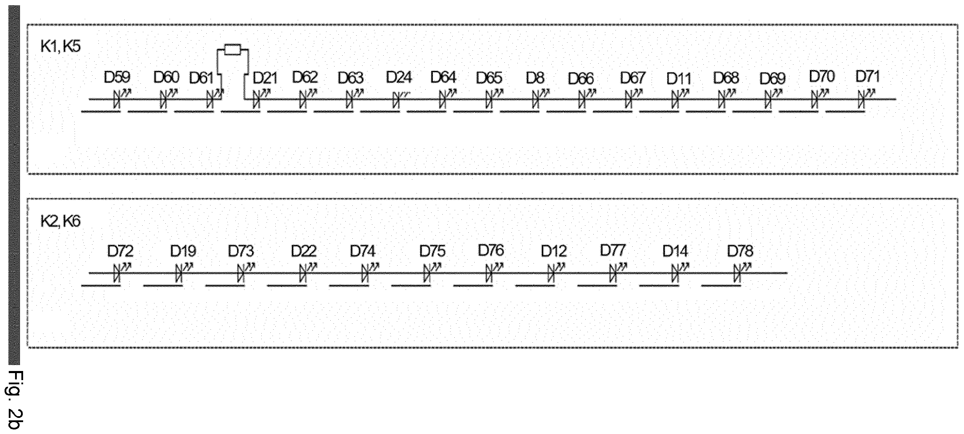

Die **Figuren 2a****/b** zeigen einen Schaltplan zur Steuerung der auf der Basisplatine oder der Ergänzungsplatine angeordneten LEDs. Dabei werden über den Kanal K1 bzw. K5 die LEDs der Gruppen G1 und G2 der Basisplatine oder der Gruppen G6 und G7 der Ergänzungsplatine jeweils in Serie geschaltet. Ebenso werden über den Kanal K2 bzw. K6 die LEDs der Gruppe G3 der Basisplatine oder der Gruppe G8 der Ergänzungsplatine jeweils in Serie geschaltet. Dagegen werden die LEDs der Gruppen G4 und G5 der Basisplatine oder der Gruppen G9 und G10 der Ergänzungsplatine jeweils in zwei Reihen parallelgeschaltet. Dies erfolgt für die Gruppen G4 und G9 über den Kanal K3 bzw. K7sowie für die Gruppen G5 und G10 über den Kanal K4 bzw. K8.

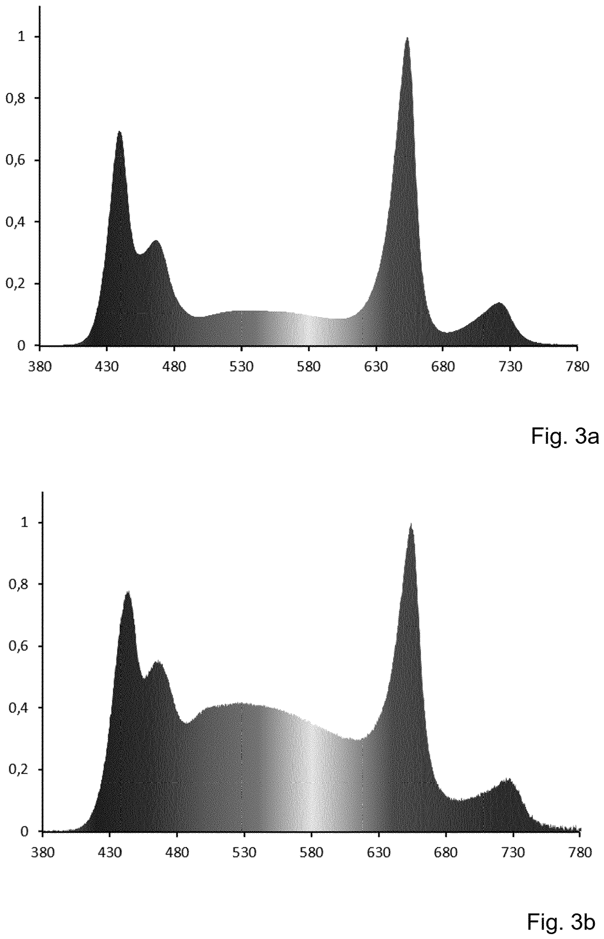

Die **Figuren 3a und 3b** zeigen je ein erfindungsgemäß erzeugtes Vollspektrum (x-Achse: Wellenlänge in nm, y-Achse: relative Intensität) mit jeweils vier Intensitätsmaxima.

Die Messung der Spektren erfolgte mithilfe des Spektrometers FLAME-S (Ocean Optics) in einem Bereich von 200 bis 850 nm. Der Abstand von der Leuchte zur Messebene betrug etwa 50 cm. Die Auswertung erfolgte mit der Software OceanView 1.6.7 (Ocean Optics).

**Figur 3a** stellt ein Vollspektrum dar, welches mittels der Basisplatine des erfindungsgemäßen Platinenmoduls erzeugt wurde. Dabei wurden die folgenden Gruppen von Leuchtdioden eingesetzt:

| Gruppe | LEDs | Lichtfarbe bzw. Farbtemperatur |
|---|---|---|
| G1 | tiefblau | 451 nm |
| G2 | blau | 475 nm |
| G3 | fern rot | 730 nm |
| G4 | weiß | 3000 - 6500 K, insbesondere 6500 K |
| G5 | rot | 660 nm |

Zur Erzeugung des dargestellten Spektrums wurden die einzelnen Kanäle der Basisplatine in Form von K1 zur Steuerung der Gruppen G1 und G2, K2 zur Steuerung der Gruppe G3, K3 zur Steuerung der Gruppe G4 und K4 zur Steuerung der Gruppe G5 jeweils auf 100 % gesetzt.

Das erhaltene Spektrum ist über den Wellenlängenbereich von 380 bis 780 nm und insbesondere im Wellenlängenbereich der PAR kontinuierlich. Es weist Intensitätsmaxima bei 445 nm (Toleranzbereich: 440 bis 450 nm), 475 nm (Toleranzbereich: 470 bis 480 nm), 662 nm (Toleranzbereich: 657 bis 667 nm) und 729 nm (Toleranzbereich: 724 bis 734 nm) auf.

**Figur 3b** stellt ein Vollspektrum dar, welches mittels einer Kombination aus der Basisplatine und der Ergänzungsplatine des erfindungsgemäßen Platinenmoduls erzeugt wurde. Dabei wurden die folgenden Gruppen von Leuchtdioden eingesetzt:

| Gruppe | LEDs | Lichtfarbe bzw. Farbtemperatur |
|---|---|---|
| G1 | tiefblau | 451 nm |
| G2 | blau | 475 nm |
| G3 | fern rot | 730 nm |
| G4 | weiß | 3000 - 6500 K, insbesondere 6300 K |
| G5 | rot | 660 nm |
| G6 | blau | 475 nm |
| G7 | weiß (EQ) | x = 0,37, y = 0,44 (CIE) |
| G8 | grün | 505 nm |
| G9 | weiß | 2700 - 4000 K, insbesondere 3000 K |
| G10 | weiß (EQ) | x = 0,37, y = 0,44 (CIE) |

Zur Erzeugung des dargestellten Spektrums wurden die einzelnen Kanäle der Basisplatine in Form von K1 zur Steuerung der Gruppen G1 und G2, K2 zur Steuerung der Gruppe G3, K3 zur Steuerung der Gruppe G4 und K4 zur Steuerung der Gruppe G5 sowie die einzelnen Kanäle der Ergänzungsplatine in Form von K5 zur Steuerung der Gruppen G6 und G7, K6 zur Steuerung der Gruppe G8, K7 zur Steuerung der Gruppe G9 und K8 zur Steuerung der Gruppe G10 jeweils auf 100 % gesetzt.

Das erhaltene Spektrum ist über den Wellenlängenbereich von 380 bis 780 nm und insbesondere im Wellenlängenbereich der PBAR bzw. der PAR kontinuierlich, besitzt aber einen höheren Weißlichtanteil als das allein mit der Basisplatine erzeugte Spektrum. Es weist Intensitätsmaxima bei 450 nm (Toleranzbereich: 455 bis 465 nm), 475 nm (Toleranzbereich: 470 bis 480 nm), 663 nm (Toleranzbereich: 658 bis 668 nm) und 733 nm (Toleranzbereich: 728 bis 738 nm) auf.

## Patentansprüche

1. Platinenmodul zur Bereitstellung von photobiologisch aktiver Strahlung umfassend
- mindestens eine Basisplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K1, K2 steuerbar sind, und optional
- mindestens eine Ergänzungsplatine mit einer Vielzahl an Leuchtdioden, die in Gruppen von mindestens zwei Leuchtdioden gleicher Lichtfarbe und/oder gleicher Farbtemperatur eingeteilt und gruppenweise über mindestens zwei voneinander unabhängige Kanäle K5, K6 steuerbar sind,
**dadurch gekennzeichnet, dass**
mindestens ein Kanal der Basisplatine und/oder mindestens ein Kanal der Ergänzungsplatine zur Steuerung von mindestens zwei Gruppen von Leuchtdioden vorgesehen ist, wobei sich diese mindestens zwei Gruppen von Leuchtdioden hinsichtlich ihrer Lichtfarbe und/oder Farbtemperatur voneinander unterscheiden.

2. Platinenmodul nach Anspruch 1, **dadurch gekennzeichnet, dass** die mindestens zwei Gruppen von Leuchtdioden unterschiedlicher Lichtfarbe und/oder Farbtemperatur mindestens eine Gruppe von Leuchtdioden einer Lichtfarbe im Bereich von größer gleich 380 nm bis kleiner gleich 500 nm, bevorzugt im Bereich von größer gleich 420 nm bis kleiner gleich 490 nm, besonders bevorzugt größer gleich 450 nm bis kleiner gleich 480 nm, umfassen.

3. Platinenmodul nach Anspruch 1 oder 2, **dadurch gekennzeichnet, dass** die mindestens eine Basisplatine und/oder die mindestens eine Ergänzungsplatine mindestens eine Gruppe von im Wesentlichen monochromatischen Leuchtdioden einer Lichtfarbe im Bereich von größer gleich 380 nm bis kleiner gleich 750 nm und mindestens eine Gruppe von weißen Leuchtdioden, insbesondere einer Farbtemperatur im Bereich von größer gleich 2500 K bis kleiner gleich 7000 K, aufweist.

4. Platinenmodul nach einem der Ansprüche 1 bis 3, **dadurch gekennzeichnet, dass** die in Gruppen von Leuchtdioden gleicher Lichtfarbe und/oder gleicher Farbtemperatur eingeteilten Leuchtdioden der mindestens einen Basisplatine gruppenweise über mindestens vier voneinander unabhängige Kanäle K1, K2, K3, K4 steuerbar sind, wobei
- der Kanal K1 zur Steuerung von mindestens zwei Gruppen G1, G2 von Leuchtdioden einer Lichtfarbe im Bereich von größer gleich 420 nm bis kleiner gleich 490 nm,
- der Kanal K2 zur Steuerung von mindestens einer Gruppe G3 von Leuchtdioden einer Lichtfarbe im Bereich von größer gleich 700 nm bis kleiner gleich 750 nm,
- der Kanal K3 zur Steuerung von mindestens einer Gruppe G4 von Leuchtdioden einer Farbtemperatur von größer gleich 6000 K bis kleiner gleich 7000 K, und/oder
- der Kanal K4 zur Steuerung von mindestens einer Gruppe G5 von Leuchtdioden einer Lichtfarbe im Bereich von größer gleich 630 nm bis kleiner gleich 700 nm vorgesehen ist, und optional
die in Gruppen von Leuchtdioden gleicher Lichtfarbe und/oder gleicher Farbtemperatur eingeteilten Leuchtdioden der mindestens einen Ergänzungsplatine gruppenweise über mindestens vier voneinander unabhängige Kanäle K5, K6, K7, K8 steuerbar sind, wobei
- der Kanal K5 zur Steuerung von mindestens einer Gruppe G6 von Leuchtdioden einer Lichtfarbe im Bereich von größer gleich 420 nm bis kleiner gleich 490 nm und mindestens einer Gruppe G7 von Leuchtdioden einer Farbtemperatur, die im CIE-Farbraum einem Farbort mit den Koordinaten x = 0,37 und y = 0,44 entspricht,
- der Kanal K6 zur Steuerung von mindestens einer Gruppe G8 von Leuchtdioden einer Lichtfarbe im Bereich von größer gleich 490 nm bis kleiner gleich 560 nm,
- der Kanal K7 zur Steuerung von mindestens einer Gruppe G9 von Leuchtdioden einer Farbtemperatur von größer gleich 2500 K bis kleiner gleich 3500 K, und/oder
- der Kanal K8 zur Steuerung von mindestens eine Gruppe G10 von Leuchtdioden einer Farbtemperatur, die im CIE-Farbraum einem Farbort mit den Koordinaten x = 0,37 und y = 0,44 entspricht,
vorgesehen ist.

5. Platinenmodul nach Anspruch 4, **dadurch gekennzeichnet, dass**
- die Gruppe G1 gemeinsam mit der Gruppe G2 und optional die Gruppe G6 gemeinsam mit der Gruppe G7 größer gleich 9 bis kleiner gleich 25, vorzugsweise größer gleich 14 bis kleiner gleich 21, insbesondere 17, Leuchtdioden,
- die Gruppe G3 und optional die Gruppe G8 größer gleich 7 bis kleiner gleich 15, insbesondere 11, Leuchtdioden,
- die Gruppe G4 und optional die Gruppe G9 größer gleich 18 bis kleiner gleich 26, insbesondere 22, Leuchtdioden, und/oder
- die Gruppe G5 und optional die Gruppe G10 größer gleich 24 bis kleiner gleich 32, insbesondere 28, Leuchtdioden,
umfasst.

6. Platinenmodul nach Anspruch 4 oder 5, **dadurch gekennzeichnet, dass** die Kanäle K1, K2 und optional die Kanäle K5, K6 mit einem Eingangsstrom von 350 mA und die Kanäle K3, K4 und optional die Kanäle K7, K8 mit einem Eingangsstrom von 700 mA betrieben werden, wobei vorzugsweise die Vorwärtsspannung
- für den Kanal K1 größer gleich 48 V bis kleiner gleich 58 V, insbesondere 53 V,
- für den Kanal K2 größer gleich 17 V bis kleiner gleich 27 V, insbesondere 22 V,
- für den Kanal K3 größer gleich 26 V bis kleiner gleich 36 V, insbesondere 31 V,
- für den Kanal K4 größer gleich 25 V bis kleiner gleich 35 V, insbesondere 30 V,
- für den Kanal K5 größer gleich 44 V bis kleiner gleich 54 V, insbesondere 49 V,
- für den Kanal K6 größer gleich 31 V bis kleiner gleich 41 V, insbesondere 36 V,
- für den Kanal K7 größer gleich 26 V bis kleiner gleich 36 V, insbesondere 31 V, und/oder
- für den Kanal K8 grö0er gleich 36 V bis kleiner gleich 46 V, insbesondere 41 V, beträgt.

7. Platinenmodul nach einem der Ansprüche 4 bis 6, **dadurch gekennzeichnet, dass** die durch die Kanäle K1, K2 und optional die Kanäle K5, K6 gesteuerten Leuchtdioden in Serie und die durch die Kanäle K3, K4 und optional die Kanäle K7, K8 gesteuerten Leuchtdioden in zwei Reihen parallelgeschaltet sind.

8. Platinenmodul nach einem der Ansprüche 4 bis 7, **dadurch gekennzeichnet, dass** die von dem Platinenmodul bereitgestellte photobiologisch aktive Strahlung
- zu 5 bis 25 % von den vom Kanal K1 und optional vom Kanal K5 gesteuerten Leuchtdioden,
- zu 0 bis 15 % von den vom Kanal K2 und optional vom Kanal K6 gesteuerten Leuchtdioden,
- zu 10 bis 35 % von den vom Kanal K3 und optional vom Kanal K7 gesteuerten Leuchtdioden, und/oder
- zu 15 bis 45 % von den vom Kanal K4 und optional vom Kanal K8 gesteuerten Leuchtdioden
zur Verfügung gestellt wird, basierend auf einer im Bereich von 280 nm bis 800 nm gemessen Gesamtstrahlung von 100 %.

9. Platinenmodul nach einem der Ansprüche 1 bis 8, **dadurch gekennzeichnet, dass** die von dem Platinenmodul bereitgestellte photobiologisch aktive Strahlung eine elektronische Photonenflussdichte von größer gleich 100 µmol/m²s, bevorzugt eine elektronische Photonenflussdichte von größer gleich 500 µmol/m²s, besonders bevorzugt größer gleich 700 µmol/m²s, aufweist.

10. Platinenmodul nach einem der Ansprüche 1 bis 9, **dadurch gekennzeichnet, dass** das Verhältnis der Summe der auf die Wellenlängenbereiche a), b), c) und d) entfallenden photobiologisch aktiven Strahlung zu der auf den Wellenlängenbereich e) 700 bis 800 nm entfallenden photobiologisch aktiven Strahlung 10 : 1 bis 15 : 1 beträgt.

11. LED-Belichtungssystem zur Bereitstellung von photobiologisch aktiver Strahlung umfassend mindestens eine LED-Leuchte, insbesondere eine fluidkühlbare LED-Leuchte, die mindestens ein Platinenmodul nach einem der Ansprüche 1 bis 10 umfasst.

12. Verwendung mindestens eines Platinenmoduls nach einem der Ansprüche 1 bis 10 oder eines LED-Belichtungssystems nach Anspruch 11 zur Erzeugung eines Vollspektrums in einem Wellenlängenbereich von 380 bis 780 nm.

13. Verwendung nach Anspruch 12, wobei
ein Vollspektrum in einem Wellenlängenbereich von 380 bis 780 nm mit Intensitätsmaxima im Bereich von 450 ± 5 nm, 475 ± 5 nm, 663 ± 5 nm und 733 ± 5 nm erzeugt wird.

14. Verwendung nach Anspruch 12 oder 13, wobei
das mindestens eine Platinenmodul oder das LED-Belichtungssystem eine Strahlungsleistung von größer gleich 700 µmol/s, insbesondere eine Strahlungsleistung von größer gleich 750 µmol/s, aufweist.

15. Software zur Steuerung mindestens eines Platinenmoduls nach einem der Ansprüche 1 bis 10 oder eines LED-Belichtungssystems nach Anspruch 11, welche die Strahlungsleistung, insbesondere den Photonenfluss (PF), die Beleuchtungsstärke, insbesondere die Photonenflussdichte (PFD), die Lichtausbeute, insbesondere die Photonenflussausbeute (PFA), das Spektrum und/oder den zeitlichen Schaltzyklus der Leuchtdioden steuert.
